# EUROPÄISCHE PATENTSCHRIFT

(11) **EP 3 452 948 B1**
(45) Veröffentlichungstag und Bekanntmachung des Hinweises auf die Patenterteilung: **31.03.2021**
(21) Anmeldenummer: 17729763.7
(22) Anmeldetag: 04.05.2017
(51) Int. Cl.: G06K 7/10

(54) **SCANNEREINHEIT**
SCANNER UNIT
UNITÉ DE BALAYAGE

(30) Priorität: 06.05.2016 DE 102016108452
(43) Veröffentlichungstag der Anmeldung: 13.03.2019
(73) Patentinhaber: WIPOTEC GmbH, 67657 Kaiserslautern (DE)
(72) Erfinder: DÜPPRE, Theo, 67663 Kaiserslautern (DE); SCHULZ, Stefan, 67661 Kaiserslautern (DE)
(74) Vertreter: Eder Schieschke & Partner mbB
(86) Internationale Anmeldenummer: PCT/DE2017/100380
(87) Internationale Veröffentlichungsnummer: WO 2017/190740

(56) Entgegenhaltungen:
- DE-A1- 4 430 611
- DE-U1-202011 101 191
- US-A- 5 523 562
- US-B1- 7 924 477

## Beschreibung

Die vorliegende Erfindung betrifft eine Förderanlage mit einer Scannereinheit zur optischen Erfassung von Merkmalen eines Produkts nach dem Oberbegriff des Anspruchs 1.

Bei der industriellen Herstellung und bei Versand und Kommissionierung von Packungen (im Weiteren auch "Produkte") werden häufig Kennzeichnungen auf dem Produkt angebracht, beispielsweise zum Zweck der Identifizierung und Rückverfolgung. Dabei kann es sich um ein Etikett, um eine direkt aufgedruckte Kennzeichnung oder sonstige Markierungen handeln, die optisch gelesen werden können. Dies umfasst auch Kennzeichen, die mit dem sogenannten "Molding" in das Produkt eingebracht werden, also optisch lesbare Merkmale, die bspw. nicht nur auf der Bodenoberfläche, sondern im Bodenmaterial selbst enthalten sind. Die Kennzeichnungen werden während der Handhabung der Produkte (insbesondere maschinell) wieder eingelesen, beispielsweise zur Qualitätssicherung (auch der Kennzeichnung selbst) oder zur Steuerung von Warenströmen oder zur Produktverfolgung und zur Erkennung von gefälschten Produkten.

Da die Produkte in automatisierten Produktions- und Verteilanlagen oft mit Geschwindigkeiten von mehreren Metern pro Sekunde transportiert werden, muss auch das maschinelle Einlesen der auf den Produkten angebrachten Kennzeichnung mit entsprechend hoher Geschwindigkeit und Präzision erfolgen. Das Ablesen der Kennzeichnung darf dabei nicht durch äußere Umstände negativ beeinflusst werden, wie beispielsweise durch Verschmutzung des Lesegeräts.

Für das maschinelle Einlesen der Kennzeichnungen bzw. der Kennzeichnungsdaten werden Scanner verwendet, die auf verschiedenen Technologien basieren. Eine Möglichkeit ist die Verwendung von Kameras. Da sich bei hohen Transportgeschwindigkeiten das schnell an der Kamera vorbeibewegte Produkt nur für sehr kurze Zeit im Aufnahmebereich der Kamera befindet, muss diese mit einer sehr kurzen Belichtungszeit arbeiten können. Das verschlechtert jedoch den Kontrast und die Helligkeit der Aufnahme. Um dem entgegenzuwirken, werden starke Beleuchtungseinrichtungen in der Nähe der Kamera platziert, welche die zu erfassende Kennzeichnung im Aufnahmebereich der Kamera ausleuchten.

Kameras mit Flächensensoren können zwar einen großen Bildausschnitt erfassen, sind jedoch relativ teuer.

Um eine gute Abbildungsqualität zu erreichen, ist eine großflächige und gleichmäßige Ausleuchtung des Objekts notwendig. Um entlang der ganzen Breite der Produkte Kennzeichnungen erfassen zu können, sind Flächensensoren ungeeignet oder zu teuer, so dass bevorzugt Kameras eingesetzt werden, die einen preiswerten Zeilensensor verwenden. Das Bild eines Objekts wird zeilenweise durch Relativbewegungen zwischen Erfassungszeile und Objekt erfasst.

Typischerweise werden Kamera und Beleuchtungseinrichtung so angeordnet, dass sie freie Sicht auf die zu erfassende Kennzeichnung haben. Diese erweist sich insbesondere dann als schwierig, wenn sich die Kennzeichnung an der Unterseite des Produkts befindet.

Es sind Lösungen bekannt, die die Kamera unterhalb eines Bandtransportsystems so anordnen, dass sich die Kamera oder zumindest eine zugehörige Erfassungs- bzw. Umlenkoptik genau unterhalb des Spaltes zwischen zwei Umlenkrollen befindet. Nachteilig hierbei ist, dass herabfallender Abrieb (vom Transportgurt oder vom Produkt) die Kamera bzw. die Optik rasch verschmutzt und eine häufige Reinigung erforderlich wird. Der dafür erforderliche Stopp der Transporteinrichtung reduziert die Durchsatzrate und die Produktivität der Gesamtanlage. Schwierig ist ferner, das Produkt von unten durch den Spalt hindurch ausreichend zu beleuchten.

Die Spaltbreite zwischen den Umlenkrollen benachbarter Transportbänder darf nicht zu groß sein, weil sonst die transportierten Produkte (zum Beispiel aufrechtstehende Aerosoldosen) umkippen oder mit der Vorderkante in den Spalt einsinken/abkippen. Sie können auch gegen die nachfolgende Rolle stoßen und unkontrolliert hochgeschleudert werden, was eine bildtechnische Aufnahme erschwert oder unmöglich macht.

Die zur Erreichung einer hohen Bildaufnahmequalität erforderliche gleichmäßige Objektausleuchtung könnte insbesondere für Flächensensoren durch eine koaxial und eng um die Kamera herum angeordnete Lichtquelle erreicht werden. Nachteilig dabei ist jedoch das vom Produkt direkt und allseitig zur Kamera reflektierte Licht. Ein zur Reflektionsunterdrückung in den Strahlengang eingebrachter Farb- oder Polarisationsfilter würde auch die Nutzinformation entsprechend dämpfen, was durch eine Erhöhung der Belichtungszeit ausgeglichen werden müsste. Dies ist jedoch bei schneller bewegten Produkten kaum möglich oder sinnvoll, da Schliereneffekte auftreten und das aufgenommene Bild schwer oder gar nicht auswertbar ist.

Die US 5 523 562 A beschreibt einen Scanner, umfassend eine Lichtquelle und eine optische Einheit zur Aufnahme der von der Lichtquelle emitierten und an einem zu scannen Objekt reflektierten Lichtstrahlen. Das Objekt wird dazu auf eine Glasfläche oberhalb der Lichtquelle aufgelegt, und die optische Einheit wird gemeinsam mit der Lichtquelle entlang des ruhenden Objekts bewegt.

Die US 7 924 477 B1 beschreibt ebenfalls einen Scanner, mit dessen Hilfe Falten oder Risse in einem zu scannen Dokument erkannt werden sollen. Auch hier ruht das zu scannen Objekt auf einer durchsichtigen Scheibe, während Beleuchtung- und optische Einheit relativ dazu belegt werden.

Aus der DE 20 2011 101 191 U1 ist ein Codelesegerät bekannt, bei dem von einer Leuchtdiode ausgesandtes Licht an einem Barcodeträger reflektiert und in zu einem Objektiv innerhalb des Scannergehäuses weitergeleitet wird

Aus der DE 44 30 611 A1 ist eine Einrichtung zum Erkennen von Fördergut auf einem Förderer bekannt. Zwischen einzelnen Rollen eines Rollenförderers ist dabei ein Lichttaster angeordnet, der über eine Steuerung mit einem Magnetventil verbunden ist, um dadurch Förderprozesse entlang des Förderers zu beeinflussen.
Aufgabe der Erfindung war es daher, eine Leseeinrichtung für Kennzeichnungen, insbesondere von schnell bewegten Produkten, zu schaffen, welche eine zuverlässige, dauerhafte und optimierte Beleuchtung und Erfassung der Kennzeichnung ermöglicht, insbesondere von unten an Transportsystemen mit Rollenspalt.

Die Aufgabe wird gelöst durch eine Förderanlage nach Anspruch 1. Weitere vorteilhafte Ausführungsformen ergeben sich aus den Unteransprüchen.

Eine erfindungsgemäße Förderanlage zur optischen Erfassung von Merkmalen eines Produkts umfasst danach die Merkmale des Anspruchs 1, insbesondere eine Lichtquelle zur Ausgabe eines schmalen, durch eine Durchtrittsöffnung des Gehäuses auf das Produkt zu richtenden Lichtstreifens längs einer Beleuchtungsrichtung, so dass der Lichtstreifen in Form einer für die Beleuchtung ausreichend dicken Linie auf eine Kennzeichnung in der Lesezone des Produkts auftrifft. Von dort wird das Licht als schmaler Reflexionsstreifen durch eine weitere Durchtrittsöffnung zurück ins Gehäuse reflektiert, wo es in eine Optikeinheit einfällt. Die zur Scannereinheit gehörende Optikeinheit kann mehrere Komponenten umfassen, beispielsweise einen Zeilensensor und einen Umlenkspiegel, welcher den einfallenden Reflexionsstreifen auf den Zeilensensor umlenkt. Auch ein Kameraobjektiv oder eine (Spalt-) Blende kann zu den Komponenten der Optikeinheit gehören.

Das Reflexionsverhalten im Bereich der Kennzeichnung hängt wesentlich von den Materialeigenschaften des Produkts ab. Je nach Einfallswinkel können unterschiedliche und auch mehrere Ausfallswinkel entstehen, in denen das Licht besser oder schlechter reflektiert wird.

Derjenige Reflexionsstrahl, der vom Produkt ausgehend - mit oder ohne Umlenkung oder sonstige Beeinflussung des Strahlengangs - genau den Zeilensensor erreicht, tritt dabei in einer als Reflexionsrichtung bezeichneten Richtung in das Gehäuse der Scannereinheit ein. Die Reflexionsrichtung wird bestimmt durch die Lage des Zeilensensors der Optikeinheit.

Lichtquelle und Optikeinheit sind erfindungsgemäß in einem gemeinsamen Gehäuse angeordnet und so lichtdicht voneinander abgeschottet, dass das Licht der Lichtquelle die Optikeinheit nur durch Reflexion außerhalb des Gehäuses erreichen kann. Dadurch ergibt sich der Vorteil, dass die Lichtquelle nicht innerhalb des Gehäuses durch ungewollte Reflexionen in die Optikeinheit einstrahlt und dadurch das Messergebnis verfälscht oder die Auswertung erschwert. Stattdessen sind Lichtquelle und Optikeinheit lichttechnisch so separiert, dass das Licht der Lichtquelle das Gehäuse zunächst verlassen muss, bevor es an einer Kennzeichnung des Produkts (Lesezone) reflektiert wird, um von dort wieder ins Gehäuse und in die Optikeinheit einzutreten. Störende Streulichteffekte innerhalb des Gehäuses werden so vermieden.

Erfindungsgemäß ist außerdem vorgesehen, dass zwischen der Beleuchtungsrichtung, in der das Licht auf das Produkt fällt und der Reflexionsrichtung, in welcher es von dort in die Optikeinheit einfällt, ein Winkel α > 0° besteht, der vorzugsweise im Bereich zwischen 10° und 20° liegt. Dieser hängt auch von den Materialeigenschaften des Produkts bzw. der Kennzeichnung ab. Sofern die Ablesung - wie nachfolgend noch beschrieben wird - zwischen benachbarten Abschnitten einer Förderanlage hindurch erfolgt, sind größere Winkel möglich, wenn die Förderabschnitte weiter voneinander entfernt sind und der Förderspalt zwischen ihnen entsprechen größer ausfällt. Je länger ein Produkt in Förderrichtung ist, umso größer kann der Förderspalt und damit der Winkel α ausfallen.

Nach einer vorteilhaften Ausführungsform der Erfindung umfasst die Scannereinheit an den Durchtrittsöffnungen je ein Fenster für den Austritt des Lichtstreifens und den Einfall des Reflexionsstreifens, wobei beide Fenster bevorzugt durch einen lichtundurchlässigen Gehäuseabschnitt voneinander getrennt sind. Vorzugsweise liegen beide Fenster in einer gemeinsamen Ebene und schließen mit ihrer nach außen gerichteten Oberfläche bündig mit der Gehäusewand ab. Dadurch ergibt sich eine insgesamt glatte Gehäuseaußenfläche im Bereich des Lichtein- bzw. austritts, der so besonders leicht zu reinigen ist. Der zwischen den Fenstern angeordnete lichtundurchlässige Gehäuseabschnitt stellt außerdem sicher, dass - anders als bei einem für Lichteintritt und Lichtaustritt gemeinsamen Fenster - keine unerwünschten Streulichteffekte auftreten können. Die beiden Fenster können mit gleichen oder unterschiedlichen Polarisationsfiltern versehen sein, um die Eigenschaften des ein- und ausfallenden Lichts nach Wunsch anzupassen. Solche Filter können je nach Wunsch auch vor bzw. in die Fenster einschiebbar sein, so dass sie je nach Anwendungsfall beliebig ausgetauscht und angepasst werden können.

Die Anordnung der Lichtquelle und der Optikeinheit innerhalb eines gemeinsamen Gehäuses bietet ferner den besonderen Vorteil, dass die Scannereinheit als Ganzes, im Sinne einer anschlussfertigen modularen Inspektionseinheit, einsetzbar ist. Sie kann vorjustiert bereitgestellt werden und unterscheidet sich damit von den Leseeinrichtungen, bei denen eine Lichtquelle und eine separat dazu bereitgestellte Optik am Einsatzort aufeinander eingestellt bzw. justiert werden müssen. Im Falle einer Störung oder zu Wartungs- und Reinigungszwecken kann die erfindungsgemäße Scannereinheit dagegen als Modul mit wenigen Handgriffen entnommen und durch ein gleichartiges, vorjustiertes Modul ersetzt werden, welches ohne weitere Einstellungen sofort einsetzbar ist.

Die im Gehäuse gemeinsam angeordnete Lichtquelle und die Optikeinheit sind vorzugsweise auch wärmetechnisch voneinander getrennt, etwa indem beide Komponenten in unterschiedlichen raumartig abgetrennten bzw. isolierten Segmenten des Gehäuses positioniert sind. Störende Wärmeeinstrahlungen von einer auf die andere Komponente werden dadurch vorteilhaft vermieden oder reduziert.

Eine vorteilhafte Ausführungsform der Erfindung sieht vor, dass die Optikeinheit eine Umlenkeinheit aufweist, mit welcher der Reflexionsstreifen aus der Reflexionsrichtung in eine Umlenkrichtung umgelenkt wird. Bei der Umlenkeinheit kann es sich im einfachsten Falle um einen ebenen Spiegel handeln. Dieser kann jedoch auch gewölbt oder mit einem anderen geeigneten Oberflächenprofil ausgestattet sein, um das vom Produkt reflektierte Licht in geeigneter Weise in Richtung auf einen Zeilensensor einer Zeilenkamera umzulenken. Die Umlenkung um einen Spiegelwinkel ß von beispielsweise ca. 90° ermöglicht eine flache Bauweise der Scannereinheit, so dass der durch eine Oberseite des Gehäuses eintretende Reflexionsstreifen im Gehäuse in eine Gehäuselängsrichtung umgelenkt werden kann, entlang derer sich eine Kamera bzw. deren Zeilensensor befindet. Die Scannereinheit kann so relativ flach ausgebildet sein und nimmt - gerade auch für den Einbau unterhalb des Gurtes, Riemens oder einer Kette einer Förderanlage - nur eine geringe Bauhöhe ein.

Vorzugsweise ist die Beleuchtungsrichtung der Lichtquelle und/oder die durch die Umlenkeinheit bestimmte Umlenkrichtung manuell oder mittels einer Steuereinheit einstellbar. Dies dient dazu, den austretenden Lichtstreifen so auszurichten, dass der an der Lesezone des Produkts erzeugte Reflexionsstreifen in einer vorgegebenen Richtung und räumlichen Lage ("Reflexionsrichtung") zurück ins Gehäuse und auf den dort vorgesehenen Zeilensensoren einfällt. Die optischen Komponenten, insbesondere eine Kamera, deren Zeilensensor oder ein Umlenkspiegel, können dabei ebenso wie die Lichtquelle justierbar, arretierbar oder um vorgebbare Achsen schwenkbar einstellbar sein, wobei die Einstellung vorzugsweise durch eine oder mehrere Gehäuseöffnungen hindurch von außen erfolgen kann. Hierzu können Stellschrauben, Rastmechanismen oder ähnliche Justiermittel dienen.

Vorzugsweise ist die Beleuchtungsrichtung manuell oder mittels einer Steuereinheit so justierbar, dass die Reflexionsrichtung und die räumliche Lage des Reflexionsstrahls auch bei einer Veränderung des Abstands X unverändert bleiben. Der Abstand X bezeichnet dabei entlang der Reflexionsrichtung die Strecke zwischen der Lesezone und der Durchtrittsöffnung für den Reflexionsstreifen bzw. derjenigen Komponente der Optikeinheit, in welche der Reflexionsstreifen einfällt. Ändert sich dieser Abstand, weil beispielsweise unterschiedliche Produkte mit unterschiedlich positionierten Lesezonen transportiert und gescannt werden sollen, so ist die Beleuchtungsrichtung des Lichtstreifens darauf anzupassen, um sicherzustellen, dass die Reflexionsrichtung beibehalten werden kann. Anhand des Figurenbeispiels wird dies deutlich werden.

Zur Justierung der Scannereinheit sieht eine vorteilhafte Ausführungsform vor, dass in Beleuchtungsrichtung und in (entgegengesetzter) Reflexionsrichtung je ein Justierstrahl aus dem Gehäuse gerichtet wird, um mittels des Schnittpunkts beider Justierstrahlen die Lichtquelle auf die Lesezone im jeweils abzutastenden Abstand X justieren zu können. Der Schnittpunkt beider Justierstrahlen gibt also die Höhe X an, in der die Kennzeichnung der Produkte abgelesen werden kann, da sich dort die Beleuchtungsrichtung und die Reflexionsrichtung schneiden. Die Justierstrahlen erlauben die leichte visuelle oder kameragestützte Überprüfung der korrekten Justierung der Scannereinheit.

Die erfindungsgemäße Förderanlage zur Förderung von Produkten umfasst eine zuvor beschriebene Scannereinheit und einen ersten und einen zweiten Förderabschnitt zur Förderung von Produkten in einer Förderrichtung Y. Zwischen beiden Förderabschnitten ist ein Förderspalt H ausgebildet, wobei die Scannereinheit relativ zu den Förderabschnitten so positioniert ist, dass der Lichtstreifen von unten durch den Förderspalt hindurch auf eine Lesezone an der Unterseite eines transportierten Produkts gerichtet ist. So lassen sich an der Unterseite von Produkten angebrachte Kennzeichnungen während des Transports leicht und zuverlässig ablesen.

Nach einer vorteilhaften Ausführungsform der Erfindung schließt die Reflexionsrichtung mit der Förderrichtung oder einem senkrecht zur Erde gerichteten Lot einen Winkel γ ein, der kleiner als 90° ist, nach einer besonders bevorzugten Ausführungsform kleiner als 75° ist. Das vom Produkt reflektierte Licht des Lichtstreifens fällt dann - wenn die Produktunterseite mit der Transportrichtung fluchtet - schräg in die Durchlassöffnung der Scannereinheit ein, so dass diese insbesondere nicht lotrecht unterhalb der Lesezone des Produkts zu liegen kommt. Dadurch ist es möglich, die Durchtrittsöffnungen seitlich außerhalb einer zum Erdmittelpunkt gerichteten Projektion des Förderspaltes anzuordnen, mit der Folge, dass im Bereich des Förderspaltes entstehender Abrieb oder Schmutz nicht auf die Fenster des Gehäuses fällt, sondern seitlich daran vorbei. Entsprechend werden die Fenster weniger verschmutzt, so dass eine hohe Lese- und Auswertequalität beibehalten werden kann.

Der schräge Einfallswinkel des Reflexionsstreifens in die Scannereinheit erlaubt es in flexibler Weise, durch unterschiedlich angeordnete Förderspalte hindurch Kennzeichnungen abzulesen und zugleich die Verschmutzung der Durchtrittsöffnungen zu vermeiden. Auch zwischen Förderabschnitten, die einander in horizontaler Richtung teilweise überlagern und zwischen sich den Förderspalt ausbilden, ist unter Ausnutzung des schrägen Einfallswinkels des Reflexionsstreifens das Ablesen der Kennzeichnung leicht möglich. Zugleich kann die Scannereinheit mit ihren Durchtrittsöffnungen so positioniert werden, dass diese von im Bereich des Förderspaltes herabfallendem Schmutz oder Abrieb nicht beaufschlagt werden.

Förderanlagen nach dieser Anmeldung umfassen neben Gurtförderern auch Kettenförderer oder sogar Gleitförder / Rutschbahnen, die in Förderrichtung Spalte aufweisen.

Nachfolgend soll eine Ausführungsform der Erfindung anhand eines Figurenbeispiels näher erläutert werden. Dabei zeigt
- Fig. 1: eine schematische Schnittdarstellung einer erfindungsgemäßen Förderanlage mit Scannereinheit ,
- Fig. 2: einen vergrößerten Ausschnitt aus Fig. 1
- Fig. 3: eine schematische Darstellung für eine geänderte Ablesehöhe X₂,
- Fig. 4: eine perspektivische Ansicht einer erfindungsgemäßen Scannereinheit, und
- Fig. 5: eine abgewandelte Ausführungsform mit schrägen Fenstern.

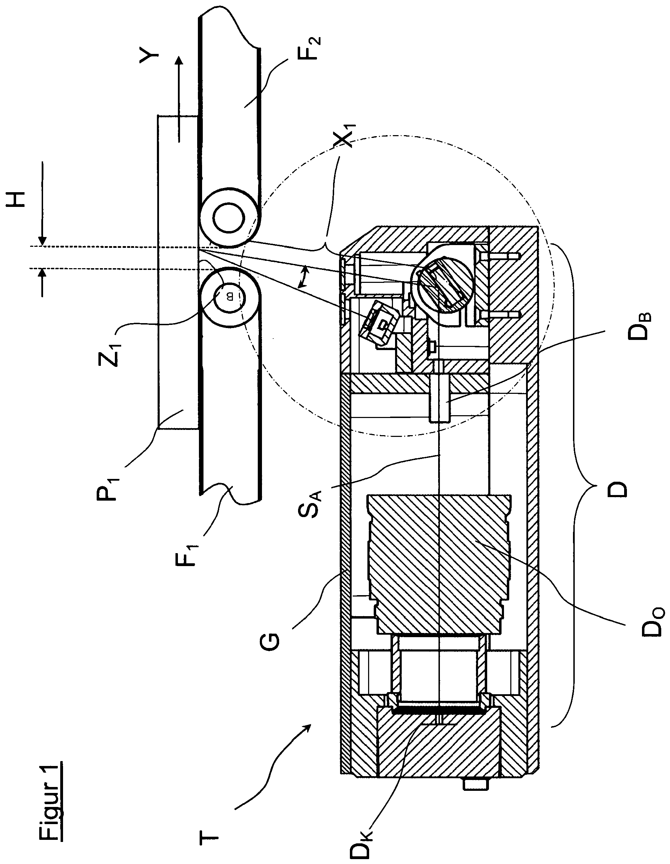

Fig. 1 zeigt in geschnittener Darstellung eine Scannereinheit T. Diese umfasst ein Gehäuse G mit einer Oberseite, die einem ersten und zweiten Förderabschnitt F₁, F₂ zugewandt ist. Die beiden Förderabschnitte sind Endbereiche von zwei in einer Förderrichtung Y hintereinander liegenden Fördergurten, die über Umlenkrollen zum Transport von Produkten P₁, P₂ angetrieben sind. Zwischen den Förderabschnitten F₁, F₂ besteht ein Spalt H. Ein in Förderrichtung Y transportiertes und auf den Förderabschnitten aufliegendes Produkt P₁ enthält auf seiner der Scannereinheit zugewandten Unterseite in einer Lesezone Z₁ eine Kennzeichnung, die mit der Scannereinheit T ausgelesen werden soll.

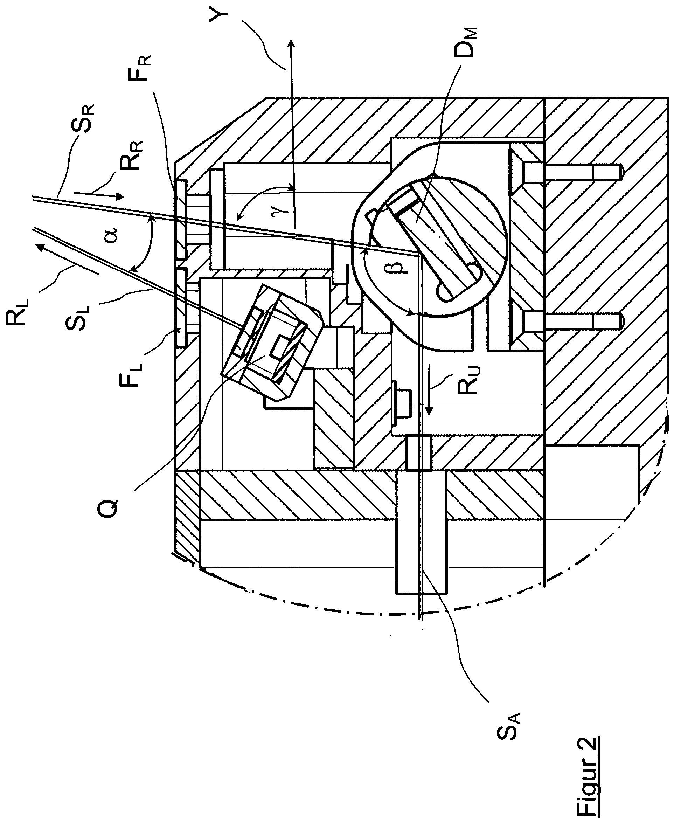

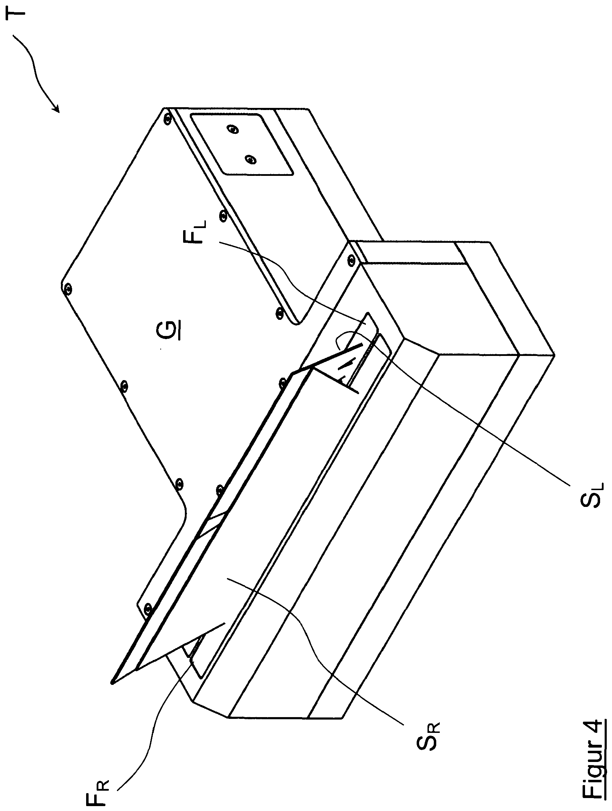

Wie in Verbindung mit Fig. 2 zu sehen ist, wird zu diesem Zweck von einer im Gehäuse G angeordneten Lichtquelle Q ein Lichtstreifen S_{L} in einer Beleuchtungsrichtung R_{L} durch ein erstes Fenster F_{L} hindurch in den Spalt H und auf die Lesezone Z₁ gerichtet. Der Lichtstreifen S_{L} verlässt das Gehäuse G dabei als schmale Zeile, welche vorzugsweise mindestens die Breite des Fördergurtes abdeckt und als schmale, leuchtstarke Linie von unten auf die Lesezone Z₁ auftrifft (Fig. 4 zeigt die Scannereinheit in perspektivischer Ansicht, wobei der aus dem Gehäuse G austretende Lichtstreifen S_{L} längs einer im Wesentlichen zweidimensionalen Fläche dargestellt ist).

Das von der der Kennzeichnung des Produkts P₁ in der Lesezone Z₁ reflektierte Licht der Lichtquelle Q wird unter anderem längs einer Reflexionsrichtung R_{R} in Form eines Reflexionsstreifens S_{R} zurück auf das Gehäuse reflektiert, wo der Reflexionsstreifen S_{R} durch das Fenster F_{R} hindurch auf eine Umlenkeinheit D_{M} trifft. Zwischen der Beleuchtungsrichtung R_{L} und der Reflexionsrichtung R_{R} liegt ein Winkel α > 0°, der vorliegend etwa 15° betragen soll.

Die beiden Fenster F_{L}, F_{R} sind in die Oberseite des Gehäuses G plan eingebettet. Diese Oberfläche erstreckt sich in diesem Ausführungsbeispiel in etwa parallel zur Förderrichtung Y, die aus Gründen der Anschaulichkeit in Fig. 2 nochmals eingetragen ist. Die Reflexionsrichtung R_{R} schließt mit der Förderrichtung Y einen Winkel γ ein, der < 90° ist. Im vorliegenden Fall liegt γ bei etwa 75°.

Das als Spiegel ausgeführte Umlenkmittel D_{M} dient dazu, den Reflexionsstreifen S_{R} um einen Spiegelwinkel β umzulenken, so dass der resultierende Auswertestreifen S_{A} den Spiegel in einer Umlenkrichtung R_{U} verlässt. Die Umlenkrichtung R_{U} erstreckt sich im Wesentlichen parallel zur Gehäuseoberseite und zur Förderrichtung Y. Wie in Fig. 1 zu sehen ist, erreicht der umgelenkte Auswertestreifen S_{A} einen Zeilensensor einer Zeilenkamera D_{K}, wo die eintreffenden Lichtsignale in elektrische Signale umgewandelt werden, um das von der Lesezone Z₁ kommende Lichtmuster auswerten zu können. Der Umlenkspiegel D_{M} gehört ebenso wie die Zeilenkamera D_{K} zur Optikeinheit D, die in Fig. 1 mit der geschweiften Klammer angedeutet ist. Ferner umfasst die Optikeinheit D auch eine Spaltblende D_{B} und ein Objektiv D_{O}.

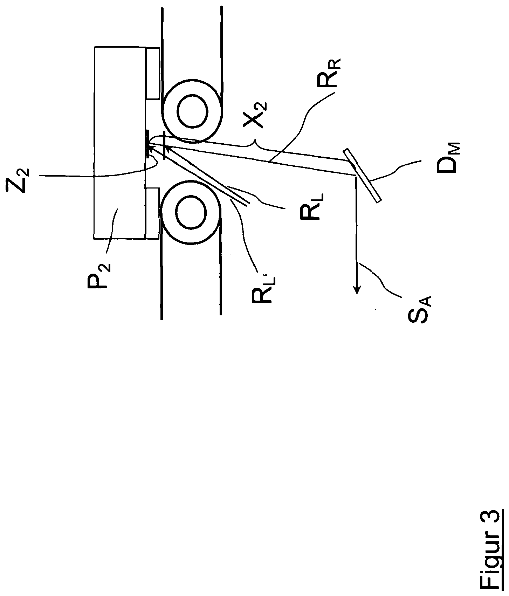

In Fig. 1 ist die Lesezone Z₁ von dem Umlenkspiegel D_{M} längs der Reflexionsrichtung R_{R} in einem Abstand X₁ positioniert. Dieser Abstand ist die "Lesehöhe", auf welche der von der Quelle Q ausgesandte Lichtstreifen S_{L} justiert ist, um das reflektierte Licht genau entlang der Reflexionsrichtung R_{R} zurück ins Gehäuse zu führen. Wie in Fig. 3 zu sehen ist, ändern sich die geometrischen Verhältnisse, wenn ein Produkt P₂ transportiert wird, dessen Lesezone Z₂ einen größeren Abstand X₂ zum Umlenkspiegel D_{M} hat, etwa weil die Kennzeichnung auf einer Erhöhung zwischen einem Rand des Produkts angebracht ist. Dies bspw. gilt auch für Prägungen oder Kennzeichnungen an der Unterseite eines seitlichen Produktrands oder -kragens. Damit das von der Lesezone Z₂ reflektierte Licht unverändert in dergleichen Reflexionsrichtung auf den Umlenkspiegel D_{M} und von dort auf den Zeilensensor D_{K} gelangen kann, muss der Lichtstreifen unter einem anderen Winkel, also längs einer anderen Beleuchtungsrichtung R_{L}', aus dem Gehäuse G hinaus auf die Lesezone Z₂ gerichtet werden.

Die Justierung der Beleuchtungsrichtung R_{L} in Abhängigkeit des Abstandes X kann manuell oder mit Hilfe einer nicht dargestellten Steuereinheit erfolgen. Diese Justierung kann, bei bekannter "Lesehöhe" X, bereits ab Werk und vor Installation der Scannereinheit am Einsatzort relativ zu den Förderabschnitten vorgenommen werden, wenn diese Relativposition bekannt ist.

Fig. 4 zeigt neben dem Lichtstreifen S_{L} auch einen Teil des von der Lesezone zurückgeworfenen Reflexionsstreifens S_{R}, der unter einem Winkel γ durch das Fenster F_{R} wieder in das Gehäuse G eintritt. Die schräge Strahlenführung des Lichtstreifens bzw. des Reflexionsstreifens, wie sie auch in Fig. 1 beispielhaft dargestellt ist, gestattet die flexible Anordnung der Scannereinheit T relativ zu einem Fördersystem derart, dass durch einen bestehenden Förderspalt H hindurch die Produktkennzeichnung auch auf der Unterseite eines Produktes schnell und zuverlässig abgelesen werden kann.

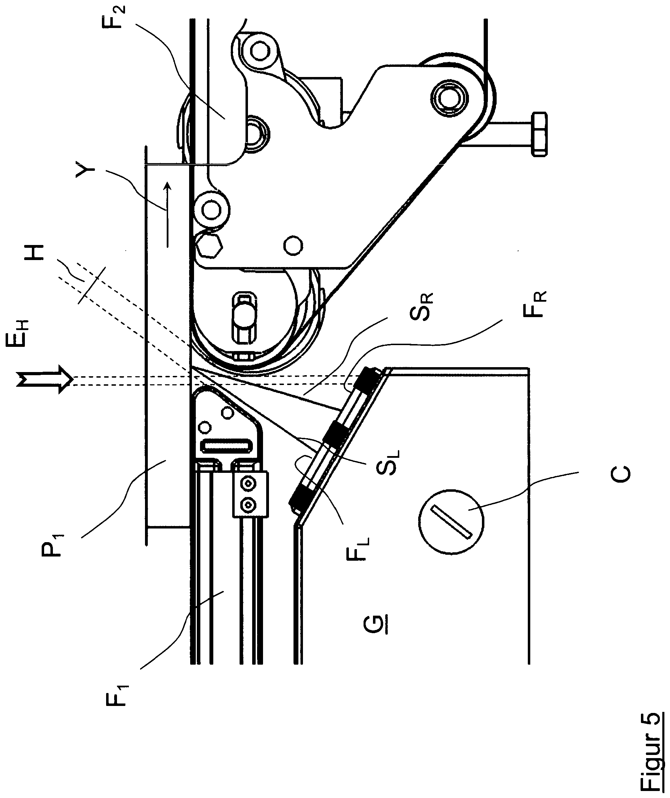

Fig. 5 zeigt eine leicht abgewandelte Ausführungsform, bei der die Fenster F_{L}, F_{R} schräg zur Förderrichtung verlaufen, so dass auftreffende Schmutzpartikel eher abrutschen und den Strahlengang nicht behindern. Sie sind außerdem seitlich einer vertikalen Projektion E_{H} des Förderspalts H positioniert, so dass im Spaltbereich herabfallender Schmutz nicht auf die Fenster fällt.

Durch eine staubdicht verschließbare Gehäuseöffnung C hindurch lassen sich die Lichtquelle Q und die Komponenten der Optikeinheit justieren.

### Bezugszeichen

- T: Scannereinheit
- P₁, P₂: Produkte
- Q: Lichtquelle
- S_{L}: Lichtstreifen
- R_{L}: Beleuchtungsrichtung
- Z₁, Z₂: Lesezone
- D_{M}: Umlenkeinheit
- D: Optikeinheit
- S_{R}: Reflexionsstreifen
- R_{R}: Reflexionsrichtung
- G: Gehäuse
- X₁, X₂: Abstand
- α, β, γ: Winkel
- F_{L}, F_{R}: Fenster
- S_{A}: Auswertestrahl
- R_{U}: Umlenkrichtung
- D_{K}: Zeilenkamera
- D_{B}: Blende
- D_{O}: Objektiv
- H: Förderspalt
- C: Öffnung

## Patentansprüche

1. Förderanlage zur Förderung von Produkten (P₁, P₂...) in einer Förderrichtung (Y), umfassend eine Scannereinheit (T) zur optischen Erfassung von Merkmalen eines Produkts (P₁, P₂...), ferner umfassend
a) einen ersten Förderabschnitt (F₁) zu Förderung von auf ihm aufliegenden Produkten (P₁, P₂...), und
b) einen zweiten Förderabschnitt (F₂) zur Übernahme der vom ersten Förderabschnitt zugeführten Produkte (P₁, P₂...), wobei zwischen dem ersten und zweiten Förderabschnitt ein Förderspalt (H) besteht, **dadurch gekennzeichnet,**
c) **dass** die Scannereinheit (T) relativ zu den Förderabschnitten so positioniert ist, dass ein Lichtstreifen (S_{L}) von unten durch den Förderspalt (H) hindurch auf eine Lesezone (Z₁, Z₂) an der Unterseite des Produkts (P₁, P₂...) gerichtet ist,
d) **dass** die Scannereinheit (T) eine Lichtquelle (Q) zur Ausgabe des Lichtstreifens (S_{L}) in Form eines schmalen, auf das Produkt gerichteten Lichtstreifens (S_{L}) in einer Beleuchtungsrichtung (R_{L}) umfasst, so dass der Lichtstreifen (S_{L}) längs einer Linie auf eine Lesezone (Z₁, Z₂...) des Produkts (P₁, P₂...) fällt, und
e) **dass** die Scannereinheit (T) ferner eine Komponente (D_{M}) einer Optikeinheit (D) umfasst, in welche Komponente (D_{M}) der an der Lesezone (Z₁, Z₂...) reflektierte Lichtstreifen (S_{L}) in Form eines schmalen Reflexionsstreifens (S_{R}) längs einer Reflexionsrichtung (R_{R}) einfällt,
f) wobei Lichtquelle (Q) und Optikeinheit (D) in einem gemeinsamen Gehäuse (G) angeordnet sind, welches Durchtrittsöffnungen für den Lichtstreifen (S_{L}) und den Reflexionsstreifen (S_{R}) aufweist, und
g) wobei entlang der Reflexionsrichtung (R_{R}) zwischen der Lesezone (Z₁, Z₂...) einerseits und der Durchtrittsöffnung für den Reflexionsstreifen (S_{R}) oder der Komponente (D_{M}) andererseits ein Abstand (X₁, X₂...) definiert ist,
h) wobei Lichtquelle (L) und Optikeinheit (D) innerhalb des Gehäuses (G) lichtdicht voneinander abgeschottet sind, so dass das Licht der Lichtquelle (Q) die Optikeinheit (D) nur durch Reflexion außerhalb des Gehäuses erreichen kann, und
i) wobei Beleuchtungsrichtung (R_{L}) und Reflexionsrichtung (R_{R}) einen Winkel (α) einschließen mit der Bedingung α > 0°, vorzugsweise 10°< α < 20°.

2. Förderanlage nach dem vorherigen Anspruch, **dadurch gekennzeichnet, dass** das Gehäuse (G) je ein Fenster (F_{L}, F_{R}) für den Austritt des Lichtstreifens (S_{L}) und den Einfall des Reflexionsstreifens (S_{R}) aufweist, wobei beide Fensteraußenflächen vorzugsweise in einer gemeinsamen Ebene liegen und zwischen beiden Fenstern ein lichtundurchlässiger Gehäuseabschnitt angeordnet ist.

3. Förderanlage nach einem der vorigen Ansprüche, **dadurch gekennzeichnet, dass** die Optikeinheit (D) eine Umlenkeinheit (D_{M}) aufweist, mit welcher der Reflexionsstreifen um einen Spiegel-Winkel (β) in einen längs einer Umlenkrichtung (R_{U}) gerichteten Auswertestrahl (S_{A}) umlenkbar ist.

4. Förderanlage nach dem vorhergehenden Anspruch, **dadurch gekennzeichnet, dass** die Beleuchtungsrichtung (R_{L}) der Lichtquelle (Q) und/oder die durch die Umlenkeinheit (D_{M}) bestimmte Umlenkrichtung (R_{U}) manuell oder gesteuert durch eine Steuereinheit einstellbar ist.

5. Förderanlage nach einem der vorigen Ansprüche, **dadurch gekennzeichnet, dass** die Beleuchtungsrichtung (R_{L}) manuell oder gesteuert durch eine Steuereinheit so justierbar ist, dass die Reflexionsrichtung (R_{R}) und die räumliche Lage des Reflexionsstrahls (S_{R}) bei Veränderung des Abstands (X₁, X₂...) unverändert bleiben.

6. Förderanlage nach einem der vorigen Ansprüche, **dadurch gekennzeichnet, dass** in Beleuchtungsrichtung (R_{L}) und in Reflexionsrichtung (R_{R}) je ein Justierstrahl aus dem Gehäuse gerichtet wird, um mittels des Schnittpunkts beider Justierstrahlen die Lichtquelle (Q) und/oder die Optikeinheit (D) auf die Lesezone (Z₁, Z₂) im Abstand (X₁, X₂...) justieren zu können.

7. Förderanlage nach einem der vorigen Ansprüche, **dadurch gekennzeichnet, dass** die Optikeinheit (D) eine Zeilenkamera (D_{K}) umfasst, welche den direkt zugeführten Reflexionsstrahl (S_{R}) oder den umgelenkt zugeführten Reflexionsstrahl (S_{R}) in elektrische Signale umwandelt.

8. Förderanlage nach einem der vorigen Ansprüche, **dadurch gekennzeichnet, dass** die Lichtquelle (Q) und Komponenten (D_{M}, D_{K}) der Optikeinheit (D) gekoppelt miteinander oder unabhängig voneinander justierbar sind.

9. Förderanlage nach dem vorhergehenden Anspruch, **dadurch gekennzeichnet, dass** die Reflexionsrichtung (R_{R}) mit der Förderrichtung (Y) einen Winkel (γ) einschließt, wobei gelten soll: γ < 90°, vorzugsweise γ < 75°.

10. Förderanlage nach dem vorhergehenden Anspruch, **dadurch gekennzeichnet, dass** die Durchtrittsöffnungen seitlich außerhalb einer zum Erdmittelpunkt oder senkrecht zur Förderrichtung gerichteten Projektion des Förderspaltes (H) liegen.

## Claims

1. Conveying installation for conveying products (P₁, P₂...) in a conveying direction (Y), comprising a scanner unit (T) for optically capturing features of a product (P₁, P₂...), furthermore comprising
a) a first conveying section (F₁) for conveying products (P₁, P₂...) lying thereon, and
b) a second conveying section (F₂) for accepting the products (P₁, P₂...) supplied by the first conveying section, wherein a conveying gap (H) exists between the first and second conveying sections,
**characterized in that**
c) the scanner unit (T) is positioned relative to the conveying sections such that a light stripe (S_{L}) is directed onto a reading zone (Z₁, Z₂) at the lower side of the product (P₁, P₂...) from below through the conveying gap (H),
d) **in that** the scanner unit (T) comprises a light source (Q) for outputting the light stripe (S_{L}) in the form of a narrow light stripe (S_{L}) directed onto the product in an illumination direction (R_{L}) such that the light stripe (S_{L}) is incident on a reading zone (Z₁, Z₂...) of the product (P₁, P₂...) along a line, and
e) **in that** the scanner unit (T) furthermore comprises a component (D_{M}) of an optics unit (D), into which component (D_{M}) the light stripe (S_{L}) reflected at the reading zone (Z₁, Z₂...) is incident in the form of a narrow reflection stripe (S_{R}) along a reflection direction (R_{R}) ,
f) wherein the light source (Q) and the optics unit (D) are arranged in a common housing (G) having through-openings for the light stripe (S_{L}) and the reflection stripe (S_{R}), and
g) wherein a distance (X₁, X₂...) is defined along the reflection direction (R_{R}) between the reading zone (Z₁, Z₂...) on the one side and the through-opening for the reflection stripe (S_{R}) or the component (D_{M}) on the other side,
h) wherein the light source (L) and the optics unit (D) are screened off from one another within the housing (G) in a light-proof manner such that the light from the light source (Q) can reach the optics unit (D) only by way of reflection outside the housing, and
i) wherein the illumination direction (R_{L}) and the reflection direction (R_{R}) enclose an angle (α) with the condition α > 0°, preferably 10° < α < 20°.

2. Conveying installation according to the preceding claim, **characterized in that** the housing (G) has a window (F_{L}, F_{R}) in each case for the exit of the light stripe (S_{L}) and the incidence of the reflection stripe (S_{R}), wherein both window outer surfaces preferably lie in a common plane and an opaque housing section is arranged between the two windows.

3. Conveying installation according to either of the preceding claims, **characterized in that** the optics unit (D) has a deflection unit (D_{M}) with which the reflection stripe is deflectable by a mirror angle (β) into an evaluation beam (S_{A}) that is directed along a deflection direction (R_{U}).

4. Conveying installation according to the preceding claim, **characterized in that** the illumination direction (R_{L}) of the light source (Q) and/or the deflection direction (R_{U}) determined by the deflection unit (D_{M}) is settable manually or controlled by a control unit.

5. Conveying installation according to one of the preceding claims, **characterized in that** the illumination direction (R_{L}) is adjustable manually or controlled by a control unit such that the reflection direction (R_{R}) and the spatial position of the reflection beam (S_{R}) remain unchanged if the distance (X₁, X₂...) changes.

6. Conveying installation according to one of the preceding claims, **characterized in that** in each case one adjustment beam is directed out of the housing in the illumination direction (R_{L}) and in the reflection direction (R_{R}) in order to allow adjustment of the light source (Q) and/or the optics unit (D) onto the reading zone (Z₁, Z₂) at the distance (X₁, X₂...) by means of the intersection of both adjustment beams.

7. Conveying installation according to one of the preceding claims, **characterized in that** the optics unit (D) comprises a line-scan camera (D_{K}), which converts the directly supplied reflection beam (S_{R}) or the reflection beam (S_{R}) that is supplied after deflection into electrical signals.

8. Conveying installation according to one of the preceding claims, **characterized in that** the light source (Q) and components (D_{M}, D_{K}) of the optics unit (D) are adjustable coupled to one another or independently of one another.

9. Conveying installation according to the preceding claim, **characterized in that** the reflection direction (R_{R}) encloses with the conveying direction (Y) an angle (γ), wherein: γ < 90°, preferably γ < 75°.

10. Conveying installation according to the preceding claim, **characterized in that** the through-openings are located laterally outside a projection of the conveying gap (H) directed toward the centre of the Earth or perpendicularly to the conveying direction.

## Revendications

1. Système de transport permettant le transport de produits (P₁, P₂...) dans un sens de transport (Y), comprenant une unité de balayage (T) permettant la détection optique de marques d'identification d'un produit (P₁, P₂...), comprenant en outre
a) une première section de transport (F₁) permettant le transport de produits (P₁, P₂...) reposant sur celle-ci, et
b) une seconde section de transport (F₂) permettant la prise en charge des produits (P₁, P₂...) alimentés par la première section de transport, un espace de transport (H) étant présent entre les première et seconde sections de transport,
caractérisé en ce
c) que l'unité de balayage (T) est positionnée par rapport aux sections de transport de telle sorte qu'une bande lumineuse (S_{L}) est dirigée depuis le bas à travers l'espace de transport (H) pour venir sur une zone de lecture (Z₁, Z₂) sur la face inférieure du produit (P₁, P₂...),
d) que l'unité de balayage (T) comprend une source lumineuse (Q) permettant l'émission de la bande lumineuse (S_{L}) sous la forme d'une bande lumineuse étroite (S_{L}), dirigée sur le produit, dans un sens d'éclairage (R_{L}), de sorte que la bande lumineuse (S_{L}) est incidente sur une zone de lecture (Z₁, Z₂...) du produit (P₁, P₂...) le long d'une ligne, et
e) que l'unité de balayage (T) comprend en outre un composant (D_{M}) d'une unité optique (D), la bande lumineuse (S_{L}) réfléchie au niveau de la zone de lecture (Z₁, Z₂...) étant incidente sur ledit composant (D_{M}) sous la forme d'une bande de réflexion étroite (S_{R}) le long d'un sens de réflexion (R_{R}),
f) la source lumineuse (Q) et l'unité optique (D) étant disposées dans un boîtier commun (G) qui présente des ouvertures de passage destinées à la bande lumineuse (S_{L}) et à la bande de réflexion (S_{R}), et
g) une distance (X₁, X₂...) étant définie le long du sens de réflexion (R_{R}) entre la zone de lecture (Z₁, Z₂...) d'une part et le composant (D_{M}) ou l'ouverture de passage destinée à la bande de réflexion (S_{R}) d'autre part,
h) la source lumineuse (L) et l'unité optique (D) étant isolées l'une de l'autre de manière étanche à la lumière à l'intérieur du boîtier (G), de sorte que la lumière de la source lumineuse (Q) ne peut atteindre l'unité optique (D) que par réflexion à l'extérieur du boîtier, et
i) le sens d'éclairage (R_{L}) et le sens de réflexion (R_{R}) formant un angle (α), à condition que α > 0°, de préférence que 10° < α < 20°.

2. Système de transport selon la revendication précédente, **caractérisé en ce que** le boîtier (G) présente respectivement une fenêtre (F_{L}, F_{R}) destinée à la sortie de la bande lumineuse (S_{L}) et à l'incidence de la bande de réflexion (S_{R}), les deux surfaces extérieures de fenêtre se trouvant de préférence sur un plan commun et une section de boîtier opaque étant disposée entre les deux fenêtres.

3. Système de transport selon l'une des revendications précédentes, **caractérisé en ce que** l'unité optique (D) présente une unité de déviation (D_{M}) au moyen de laquelle la bande de réflexion peut être déviée, d'un angle de miroir (β), en un faisceau d'évaluation (S_{A}) dirigé le long d'un sens de déviation (Ru).

4. Système de transport selon la revendication précédente, **caractérisé en ce que** le sens d'éclairage (R_{L}) de la source lumineuse (Q) et/ou le sens de déviation (Ru) déterminée par l'unité de déviation (D_{M}) peuvent être réglés manuellement ou en étant commandés par une unité de commande.

5. Système de transport selon l'une des revendications précédentes, **caractérisé en ce que** le sens d'éclairage (R_{L}) peut être aligné manuellement ou en étant commandé par une unité de commande, de telle sorte que le sens de réflexion (R_{R}) et la position spatiale du faisceau de réflexion (S_{R}) restent inchangés lorsque la distance (X₁, X₂...) varie.

6. Système de transport selon l'une des revendications précédentes, **caractérisé en ce qu'**un faisceau d'alignement est dirigé hors du boîtier respectivement dans le sens d'éclairage (R_{L}) et dans le sens de réflexion (R_{R}) afin de pouvoir aligner, au moyen de l'intersection des deux faisceaux d'alignement, la source lumineuse (Q) et/ou l'unité optique (D) sur la zone de lecture (Z₁, Z₂) à une distance (X₁, X₂...).

7. Système de transport selon l'une des revendications précédentes, **caractérisé en ce que** l'unité optique (D) comprend une caméra linéaire (D_{K}) qui convertit le faisceau de réflexion alimenté directement (S_{R}) ou le faisceau de réflexion alimenté de façon déviée (S_{R}) en signaux électriques.

8. Système de transport selon l'une des revendications précédentes, **caractérisé en ce que** la source lumineuse (Q) et les composants (D_{M}, D_{K}) de l'unité optique (D) peuvent être alignés de façon couplée les uns aux autres ou indépendamment les uns des autres.

9. Système de transport selon la revendication précédente, **caractérisé en ce que** le sens de réflexion (R_{R}) et le sens de transport (Y) forment un angle (γ), à condition que : γ < 90°, de préférence γ < 75°.

10. Système de transport selon la revendication précédente, **caractérisé en ce que** les ouvertures de passage sont situées latéralement à l'extérieur d'une projection de l'espace de transport (H) dirigée vers le centre de la terre ou perpendiculaire au sens de transport.
